# EUROPÄISCHE PATENTSCHRIFT

(11) **EP 3 168 081 B1**
(45) Veröffentlichungstag und Bekanntmachung des Hinweises auf die Patenterteilung: **11.12.2019**
(21) Anmeldenummer: 16191853.7
(22) Anmeldetag: 30.09.2016
(51) Int. Cl.: B60P 7/08

(54) **SCHIENENSYSTEM FÜR EINEN LADEBODEN EINES KRAFTFAHRZEUGS, KANALBAUTEIL FÜR EIN SCHIENENSYSTEM SOWIE LADEBODEN EINES KRAFTFAHRZEUGS**
RAIL SYSTEM FOR A LOAD FLOOR OF A MOTOR VEHICLE, CHANNEL COMPONENT FOR A RAIL SYSTEM AND LOAD FLOOR OF A MOTOR VEHICLE
SYSTÈME SUR RAILS POUR UN COFFRE DE VÉHICULE AUTOMOBILE, CONDUIT POUR SYSTÈME SUR RAILS ET COFFRE DE VÉHICULE AUTOMOBILE

(30) Priorität: 12.11.2015 DE 102015119586; 29.01.2016 DE 102016101618
(43) Veröffentlichungstag der Anmeldung: 17.05.2017
(73) Patentinhaber: FKT GmbH, 85104 Pförring (DE)
(72) Erfinder: Huber, Klaus, 85290 Geisenfeld (DE); Günthner, Guido, 85104 Pförring/Lobsing (DE); Müller, Stefan, 85088 Vohburg (DE); Neufeld, Markus, 85276 Pfaffenhofen (DE)
(74) Vertreter: Schlief, Thomas P.

(56) Entgegenhaltungen:
- EP-A1- 1 852 303
- DE-A1-102005 007 431
- DE-A1-102007 061 769
- DE-U1-202006 011 749
- US-A1- 2007 212 184

## Beschreibung

Die vorliegende Erfindung betrifft ein Schienensystem für einen Ladeboden eines Kraftfahrzeugs mit wenigstens einer ersten, vorzugsweise das Gleiten von Ladegut auf dem Ladeboden hemmenden Schiene, wobei die erste Schiene zwischen einer unteren Ruhestellung und einer oberen Betriebsstellung höhenverstellbar ist. Weiterhin betrifft die Erfindung einen Ladeboden eines Kraft-fahrzeugs.

Schienensysteme zur Sicherung von Ladegut in einem Laderaum eines Kraftfahrzeugs oder zur Erleichterung der Beladung des Laderaums sind im Stand der Technik in vielfachen Ausführungen bekannt geworden. So ist es bekannt geworden, Gleitleisten in dem Laderaum vorzusehen, welche das Verschieben des Ladeguts auf dem Ladeboden ermöglichen und dadurch das Beladen erleichtern. Ebenso sind rutschhemmende Leisten bekannt geworden, welche das Verrutschen der Ladung während der Fahrt verhindern sollen.

DE 20 2006 011 749 U1 zeigt ein Schienensystem mit einer rutschhemmenden und einer das Gleiten fördernden Schiene, die wechselnd in Bezug auf das Ladegut zum Einsatz gebracht werden können. Die das Gleiten fördernde Schiene ist dabei in der rutschhemmenden Schiene gelagert und mittels eines drehbaren Manipulationsarms anheb- und absenkbar. Der Manipulationsarm wird manuell betätigt. Das System hat nur einen geringen Platzbedarf, da es keinen elektrischen Antrieb aufweist, es hat dadurch allerdings auch nur einen geringen Bediencomfort.

Die DE 10 2007 061 769 A1 beschreibt eine Anordnung, die sowohl rutschhemmende, als auch das Gleiten verbessernde Schienen bzw. Leisten umfasst. Dabei ist zumindest eine der beiden Schienenarten mittels einer Kulissenführung oder einer Parallelogrammführung höhenverstellbar. Die beiden verschiedenen Schienen können somit wechselnd in Bezug auf das Ladegut zum Einsatz gebracht werden, wobei auch eine motorische Verstellung möglich sein soll. Zur genauen Anordnung der Schienen in dem Ladeboden sowie zur Anordnung und Funktionsweise der Betätigungskinematik werden jedoch keine näheren Angaben gemacht. In modernen Kraftfahrzeugen spielen jedoch neben der Funktion auch der Bedienkomfort, das optische Erscheinungsbild sowie die Montagefreundlichkeit derartiger Systeme eine große Rolle.

Die DE 10 2005 007 431 A1 zeigt verschiedene Ausführungen sowohl von rutschhemmenden als auch von das Gleiten fördernden Einrichtungen. Nach einer Ausführung ist eine höhenverstellbare Schiene vorgesehen, die unterseitig eine Betätigungsschräge aufweist und mittels eines beweglichen Schiebers anheb- und absenkbar ist. Es wird auch erwähnt, dass der Schieber mittels eines Elektromotors angetrieben werden soll, nähere Angaben zu der Ausführung und Anordnung der Betätigungskinematik werden jedoch auch hier nicht gemacht.

Aufgabe der vorliegenden Erfindung ist es daher, eine Schienenanordnung für einen Laderaum eines Kraftfahrzeugs zu schaffen, welche montagefreundlich ausgebildet ist und ein hochwertiges Erscheinungsbild bietet.

Die Aufgabe wird gelöst mit den Merkmalen der unabhängigen Ansprüche.

Ein Schienensystem für einen Ladeboden eines Kraftfahrzeugs weist wenigstens eine erste Schiene auf, wobei die erste Schiene zwischen einer unteren Ruhestellung und einer oberen Betriebsstellung höhenverstellbar ist. Die wenigstens eine erste Schiene ist vorzugsweise eine das Gleiten von Ladegut auf dem Ladeboden hemmende Schiene; denkbar ist es jedoch auch, die wenigstens eine erste Schiene gleitfördernd auszuführen.

Es ist vorgesehen, dass die wenigstens eine erste Schiene auf ihrer Unterseite einen Betätigungsbereich mit wenigstens einer, in Längsrichtung der ersten Schiene verlaufenden Betätigungsschräge aufweist. Die Unterseite der Schiene entspricht dabei der Seite, welche bei in das Fahrzeug eingebauter Schiene in Richtung des Ladebodens bzw. des Fahrzeugbodens weist. Dabei ist unterhalb des Betätigungsbereichs ein entlang des Betätigungsbereichs verfahrbares Verstellglied angeordnet, das wenigstens ein Betätigungselement aufweist. Die Betätigungsschräge der ersten Schiene ist somit durch das Betätigungselement beaufschlagbar, sobald das Betätigungselement beim Verfahren des Verstellglieds mit der Betätigungsschräge in Kontakt gerät. Die Betätigungsschräge kann dabei in ihrer Ruhestellung bereits auf dem Betätigungselement aufliegen oder aber erst während des Verfahrens des Verstellglieds mit dem Betätigungselement in Kontakt kommen. In jedem Falle wird dabei dadurch, dass sowohl die Betätigungsschräge als auch das Verstellglied unterhalb der wenigstens einen ersten Schiene bzw. auf der Unterseite der Schiene angeordnet sind, ein optisch ansprechendes Erscheinungsbild erreicht, da von oben betrachtet lediglich die Oberseite der Schiene in Erscheinung tritt. Die der Betätigung der Schiene dienenden Komponenten werden hingegen durch die Oberseite der Schiene verdeckt. Zudem ist die Montage des Schienensystems erleichtert, da lediglich die Schiene von oben auf das Verstellglied gesetzt werden muss.

Das wenigstens eine Betätigungselement des Verstellglieds ist vorzugsweise keilförmig in Bezug auf die Längsrichtung des Verstellglieds bzw. der Schiene ausgebildet, so dass es gegen die Betätigungsschräge der Schiene anlaufen kann und diese dadurch anhebt. Mittels eines solchen keilförmigen Betätigungselements kann somit ein besonders großer Hub der Schiene während eines vergleichsweise kurzen Verfahrwegs des Verstellglieds erreicht werden. Das Betätigungselement kann jedoch auch eine gerade Oberseite oder eine sonstige, mit Bezug auf die Längsrichtung des Verstellglieds bzw. der Schiene konstante Geometrie aufweisen.

Besonders vorteilhaft für eine komfortable Bedienung des Schienensystems ist es weiterhin, dass das Verstellglied mittels eines elektrischen Antriebs verfahrbar ist.

Dabei ist es wiederum besonders vorteilhaft, dass zwischen dem Verstellglied und dem elektrischen Antrieb ein Übertragungsmittel angeordnet ist. Hierdurch ist es möglich, den Antrieb unabhängig von der Anordnung der Schiene und des Verstellglieds dort anzuordnen, wo er gut untergebracht werden kann und nicht die Montage anderer Bauteile behindert. Ebenso ist es mittels eines oder mehrerer Übertragungsmittel möglich, auch mehrere erste Schienen mittels eines gemeinsamen Antriebs zu betätigen. Das Übertragungsmittel ist kann ein Schlitten sein, der sowohl mit dem Antrieb als auch mit dem Verstellglied, ggf. auch mehreren Verstellgliedern, in Verbindung steht und der mittels des Antriebs entlang der Längsrichtung der Schienen verfahrbar ist.

Nach einer anderen Ausführung ist das Übertragungs-mittel als Bowdenzug oder als Steigungskabel ausgeführt. Da Bodenzüge und Steigungskabel flexibel bezüglich ihrer Länge und Richtung sind, bestehen kaum Einschränkungen bezüglich der Anordnung der Schienen auf dem Ladeboden.

Ebenfalls vorteilhaft ist es, wenn das Schienensystem ein Federelement zum Rückstellen des Verstellglieds aufweist. Das Verstellglied kann hierdurch auch manuell oder durch einen einfachen Antrieb betätigt werden, während die Rückstellung automatisch durch das Federelement erfolgt. Ebenso kann das Federelement dazu dienen, das Verstellglied sicher in der abgelegten Ruhestellung zu halten.

Vorteilhaft ist es weiterhin, wenn das Verstellglied wenigstens einen Eingriffsbereich für das Übertragungsmittel aufweist. Vorzugsweise ist das Eingriffsbereich wiederum derart ausgestaltet, dass das Übertragungsmittel einfach von unten her in den Eingriffsbereich des Verstellglieds eingesetzt werden kann bzw. der Eingriffsbereich des Verstellglieds von oben her auf das Übertragungsmittel aufgesetzt und befestigt werden kann. Die Montage und Demontage des Schienensystems ist hierdurch wiederum erleichtert, da das Verstellglied und das Übertragungsmittel auch dann montiert oder demontiert werden können, wenn die Schiene in das Fahrzeug eingebaut ist.

Nach einer vorteilhaften Weiterbildung weist die wenigstens eine erste Schiene auf ihrer Unterseite eine Aussparung auf und das Verstellglied ist innerhalb der Aussparung angeordnet. Hierdurch kann eine besonders platzsparende Ausführung erreicht werden, die wiederum das Verstellglied in vorteilhafter Weise verdeckt. Besonders vorteilhaft ist es dabei, wenn lediglich der wenigstens eine Eingriffsbereich über die Außenkonturen der Schiene hinausragt, so dass der größte Teil des Verstellglieds optisch nicht in Erscheinung tritt. Das Anbringen des Übertragungsmittels kann aufgrund des herausragenden Eingriffsbereichs dennoch in einfacher Weise erfolgen. Zudem kann der Eingriffsbereich in verschiedener Weise entsprechend den jeweils vorherrschenden Gegebenheiten ausgestaltet werden, da dieser unabhängig von den Betätigungselementen ist.

Um eine kompakte Baueinheit bereitzustellen und den Betätigungsbereich der Schiene sowie das Verstellglied samt Betätigungselementen geschützt unterzubringen, ist es vorteilhaft, wenn die wenigstens eine erste Schiene ein Deckelelement zum Verschließen der Aussparung aufweist. Das Deckelelement weist dabei wenigstens eine Öffnung für den Durchtritt des wenigstens einen Eingriffsbereichs des Verstellglieds auf.

Nach einer anderen Weiterbildung des Schienensystems weist das Schienensystem wenigstens eine zweite, vorzugsweise das Gleiten von Ladegut auf dem Ladeboden begünstigende, Schiene auf, welche zur ortsfesten Montage an dem Ladeboden ausgebildet ist. Die wenigstens eine zweite Schiene muss somit nicht betätigt werden, um auf das Ladegut einzuwirken, während die wenigstens eine erste Schiene bei Bedarf betätigt, d.h. in ihrer Höhe gegenüber dem Ladeboden verstellt werden kann, um diese anstelle der zweiten Schiene temporär zum Einsatz zu bringen. Vorzugsweise ist dabei die wenigstens eine erste Schiene rutschhemmend ausgeführt und die wenigstens eine zweite Schiene gleitfördernd ausgeführt; eine umgekehrte Anordnung ist jedoch ebenso denkbar.

Besonders vorteilhaft ist es dabei, wenn die wenigstens eine erste, höhenverstellbare Schiene innerhalb einer Ausnehmung der wenigstens einen, zweiten Schiene angeordnet ist, da hierdurch eine kompakte, platzsparende Einheit geschaffen wird und die Montage erleichtert wird. Auch hier ist es daher wiederum vorteilhaft, wenn die wenigstens eine zweite Schiene ein Deckelelement zum Verschließen der Ausnehmung aufweist, wobei das Deckelelement wenigstens eine Öffnung für den Durchtritt des wenigstens einen Eingriffsbereichs des Verstellglieds aufweist.

Ebenso ist es vorteilhaft, wenn die wenigstens eine erste, höhenverstellbare Schiene, vorzugsweise die wenigstens eine erste Schiene und die wenigstens eine zweite Schiene, und das Verstellglied einen Vormontageumfang bilden. Dieser kann somit bereits vorab zusammengebaut werden und kann dann als Ganzes in das Fahrzeug montiert werden.

Nach einer anderen vorteilhaften Ausführung des Schienensystems weist das Schienensystem mehrere erste Schienen auf, wobei vorzugsweise jeweils zwei der mehreren ersten Schienen mittels eines gemeinsamen Antriebs höhenverstellbar sind.

Sind mehrere erste Schienen vorgesehen, so ist es weiterhin vorteilhaft, wenn wenigstens zwei der mehreren ersten Schienen in einem Winkel zueinander angeordnet sind, d. h. in auf dem Ladeboden montiertem Zustand erstreckt sich zumindest ein Teil der Schienen in einem Winkel bezüglich der Längsrichtung des Fahrzeugs auf dem Ladeboden. Hierdurch kann mit nur wenigen Schienen der Ladeboden in weiten Bereichen und über nahezu seine gesamte Breite rutschhemmend ausgeführt werden.

Eine andere Weiterbildung der Erfindung sieht vor, dass das Schienensystem einen Grundträger mit einer Aufnahme für den Antrieb und wenigstens einer Fixiereinrichtung für wenigstens ein Übertragungsmittel umfasst. Die Montage des Schienensystems in das Fahrzeug ist hierdurch erleichtert, da durch die Aufnahme und die Fixiereinrichtungen der Antrieb und Übertragungsmittel bei der Montage zugleich auch lagerichtig zueinander positioniert werden. Der Grundträger weist wiederum Befestigungsvorrichtungen auf, mittels welcher er an dem Ladeboden befestigt werden kann. Die Befestigungsvorrichtungen sind vorzugsweise ebenfalls derart ausgebildet, dass der Grundträger automatisch lagerichtig in Bezug auf das Fahrzeug bzw. den Ladeboden positioniert ist.

Insbesondere wenn die Übertragungsmittel als Steigungskabel ausgebildet sind, ist es vorteilhaft, wenn der Grundträger ein Kanalbauteil mit zwei Führungskanälen zur Aufnahme von temporären Überlängen der Übertragungsmittel umfasst. Ein solches Kanalbauteil ermöglicht es, die bei nicht betätigter bzw. sich in Ruhestellung befindlicher Schiene auftretenden Überlängen der Übertragungsmittel aufzunehmen und sicher zu führen. Funktionsbeeinträchtigungen der angetriebenen Schiene oder Schienen durch sich verhakende oder schlecht geführte Steigungskabel können dadurch vermieden werden. Zudem sind die Überlängen der Übertragungsmittel, beispielsweise Steigungskabel, vor Verschmutzung geschützt, was weiterhin zu einer langfristigen Funktionalität beiträgt. Auch das Handling der Übertragungsmittel bei der Montage des Schienensystems in das Fahrzeug sowie die Einstellung der Übertragungsmittel in Bezug auf den Antrieb und die Schiene oder die Schienen wird durch das Kanalbauteil erleichtert. Es wird daher auch Schutz für ein solches Kanalbauteil beansprucht.

Vorteilhaft ist es weiterhin, wenn die Aufnahme für den Antrieb an das Kanalbauteil angeformt ist, da hierdurch ein weiterer Montageschritt entfällt und der Antrieb automatisch lagerichtig platziert wird.

Vorteilhaft ist es auch, wenn das Kanalbauteil einen mehrschaligen Aufbau mit wenigstens einer Oberschale und wenigstens einer Unterschale aufweist, wobei die Führungskanäle zwischen den Schalen ausgebildet sind. Das Kanalbauteil kann hierdurch einfach hergestellt werden.

Das Kanalbauteil ist vorteilhafterweise als Spritzgussbauteil ausgeführt, da dieses besonders kostengünstig hergestellt werden kann. Insbesondere bei einem zweischaligen Aufbau ist die Herstellung des Kanalbauteils weiter vereinfacht, da keine Kerne für die Kanäle in dem Spritzgussstück oder nachträgliche Bearbeitungen zur Herstellung der Führungskanäle benötigt werden.

Weiterhin ist es vorteilhaft, wenn das Schienensystem Führungsrohre für die Übertragungsmittel aufweist und die Führungsrohre mit jeweils einem ihrer Enden an dem Kanalbauteil befestigt sind. Die Führungsrohre bilden in diesem Fall Fixiereinrichtungen für die Übertragungsmittel und sorgen für die lagerichtige Positionierung des Antriebs und der Übertragungsmittel bei der Montage. Zugleich können die Führungsrohre, die Übertragungsmittel, das Kanalbauteil und der Antrieb hierdurch eine vormontierbare Baugruppe bilden, welche bereits beim Transport und beim Handling während der Montage eine hohe Stabilität aufweist.

Vorteilhafterweise sind dabei die Führungsrohre schwenkbar an dem Kanalbauteil befestigt. Die Führungsrohre können somit während des Transports platzsparend an das Kanalbauteil angeklappt werden und erst bei der Montage der Baugruppe bzw. des Schienensystems in ihre ausgeklappte Gebrauchsposition überführt werden.

Besonders vorteilhaft ist es daher auch, wenn der Grundträger zusammen mit dem Antrieb und dem wenigstens einen Übertragungsmittel einen Vormontageumfang bildet. Sowohl das Handling der einzelnen Bauteile vor und während der Montage als auch der Einbau der Bauteile in das Fahrzeug sind hierdurch erleichtert.

Weiterhin wird ein Ladeboden eines Kraftfahrzeugs mit einem Schienensystem und/oder einem Kanalbauteil wie zuvor beschrieben vorgeschlagen.

Bei dem Ladeboden ist es besonders vorteilhaft, wenn die wenigstens eine erste Schiene auf einer Oberseite des Ladebodens angeordnet ist bzw. von oben in den Ladeboden montiert ist. Sind außer der oder den ersten Schienen auch eine oder mehrere zweite Schienen vorgesehen, so sind diese ebenfalls auf der Oberseite des Ladebodens angeordnet bzw. von oben in den Ladeboden montiert. Ebenso ist es vorteilhaft, wenn das Verstellglied auf der Oberseite des Ladebodens angeordnet ist. Der Ladeboden weist dabei wenigstens eine Öffnung für den Durchtritt des wenigstens einen Eingriffsbereichs des Verstellglieds auf. Da dadurch lediglich sehr kleine Öffnungen in dem Ladeboden erforderlich sind, weist dieser eine besonders hohe Stabilität auf.

Ebenso ist es vorteilhaft, wenn der elektrische Antrieb, vorzugsweise der elektrische Antrieb und das Übertragungsmittel, auf einer Unterseite des Ladebodens angeordnet sind. Der Antrieb bzw. das Übertragungsmittel sind hierdurch im Betrieb durch den Ladeboden verdeckt und zudem geschützt angeordnet.

Nach einer vorteilhaften Ausführung weist das Übertragungsmittel eine Gewindemutter auf, welche mit einer Gewindespindel des elektrischen Antriebs in Eingriff steht. Das Übertragungsmittel ist dabei mittels des Antriebs entlang der Längsrichtung der Schienen verfahrbar. Das Übertragungsmittel kann dabei auch zum Verfahren zweier Verstellglieder vorgesehen sein und erstreckt sich in diesem Fall senkrecht zur Längsrichtung der Schienen. Vorteilhaft ist es weiterhin, wenn der Ladeboden eine Vertiefung aufweist und der Vormontageumfang umfassend die wenigstens eine erste Schiene, vorzugsweise die wenigstens eine erste Schiene und die wenigstens eine zweite Schiene, und das Verstellglied in der Vertiefung in dem Ladeboden angeordnet ist. Es ist somit keine Durchbrechung des Ladebodens, die dessen Stabilität beeinträchtigen würde, erforderlich und die Schienen können dennoch weitgehend bündig zur Oberfläche des Ladebodens angeordnet werden.

Das Schienensystem und der Ladeboden mit dem beschriebenen Schienensystem sind auch in Verbindung mit einem Kraftfahrzeug besonders vorteilhaft.

Weitere Vorteile der Erfindung werden anhand der nachfolgend dargestellten Ausführungsbeispiele beschrieben. Es zeigen:
- **Figur 1**: ein Schienensystem für einen Laderaum eines Kraftfahrzeugs in einer perspektivischen Übersichtsdarstellung,
- **Figur 2a**: eine Schiene und ein Verstellglied in einer schematischen Schnittdarstellung in einer Ruhestellung,
- **Figur 2b**: eine Schiene und ein Verstellglied in einer schematischen Schnittdarstellung in einer Betriebsstellung,
- **Figur 3**: das Schienensystem der Figur 1 in einer perspektivischen Untersicht,
- **Figur 4**: eine perspektivische Untersicht eines Vormontageumfangs bestehend aus einer ersten Schiene, einer zweiten Schiene und einem Verstellglied,
- **Figur 5**: eine Ansicht eines Ladebodens mit Öffnungen für den Durchtritt von Eingriffsbereichen,
- **Figur 6**: eine weitere Ausführung eines Ladebodens mit schräg darauf angeordneten Schienen in einer Draufsicht,
- **Figur 7**: eine Schiene und ein Verstellglied mit einem Federelement in einer schematischen Schnittdarstellung in einer Ruhestellung,
- **Figur 8**: eine schematische Ansicht eines Grundträgers mit einer Aufnahme und Fixiereinrichtungen,
- **Figur 9**: eine perspektivische Ansicht eines Kanalbauteils mit daran angeordneten Komponenten des Schienensystems sowie
- **Figur 10**: eine Detailansicht des Kanalbauteils in einer Explosionsdarstellung.

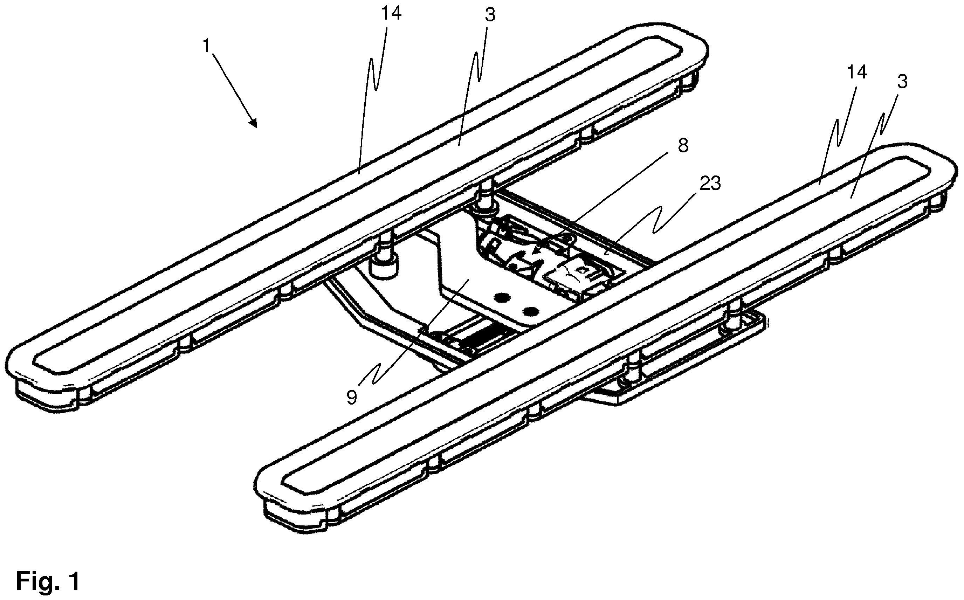

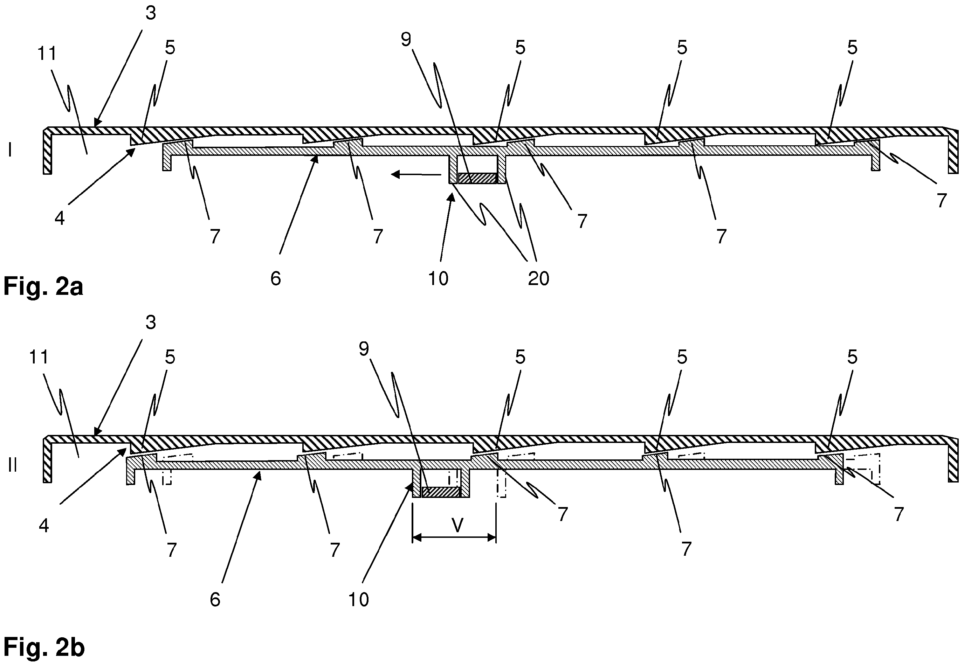

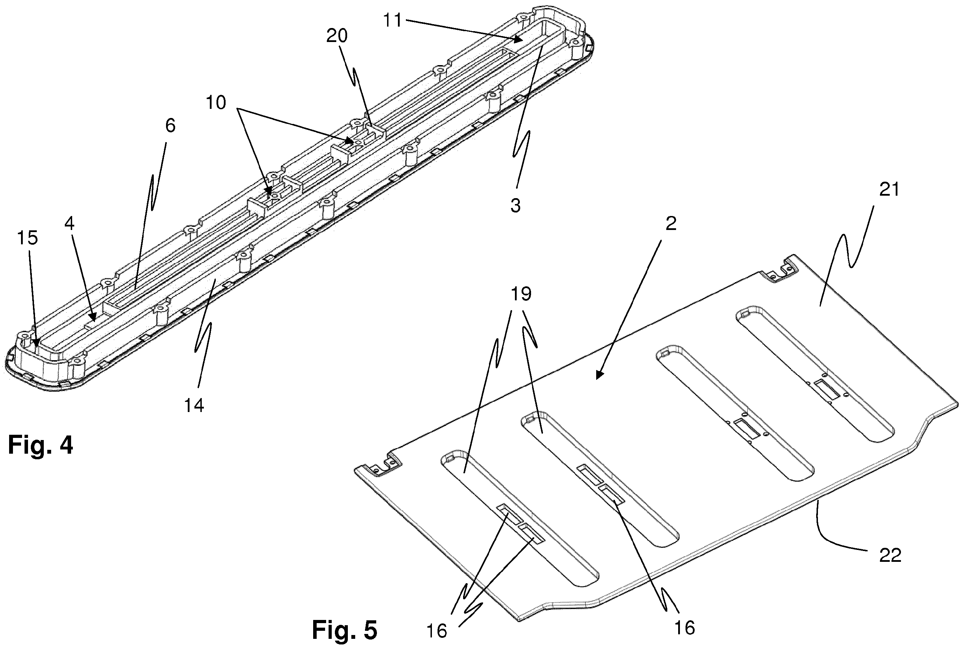

Figur 1 zeigt ein Schienensystem 1 für einen Laderaum 2 eines Kraftfahrzeugs in einer perspektivischen Übersichtsdarstellung. Das Schienensystem 1 ist zum Einbau in einen Ladeboden 2 (siehe Figur 5) vorgesehen, der jedoch vorliegend aus Gründen der Übersichtlichkeit nicht dargestellt ist. Das vorliegend gezeigte Schienensystem 1 beinhaltet dabei erste Schienen 3, die vorliegend rutschhemmend ausgebildet sind, indem die Oberfläche der ersten Schienen 3 mit einem gummiartigen Belag versehen ist. Die Schiene 3 kann jedoch auch in anderer Weise rutschhemmend ausgebildet sein, beispielsweise durch eine profilierte Kunststoffleiste oder Ähnliches. Außerdem weist das vorliegende Schienensystem 1 eine zweite Schiene 14 auf, welche vorliegend als Gleitschiene ausgebildet ist und das Gleiten von Ladegut auf dem Ladeboden begünstigt. Die zweite Schiene 14 kann beispielsweise aus einem metallischen Material hergestellt sein oder zumindest mit einem Metalleinsatz versehen sein, um das Gleiten von Ladegut auf der zweiten Schiene 14 zu erleichtern. Natürlich kann aber auch die zweite Schiene 14 aus einem Kunststoffmaterial ausgeführt sein, welches einen vergleichsweise niedrigen Reibungskoeffizienten aufweist. In jedem Falle weist die erste Schiene 3 einen höheren Reibungskoeffizienten in Bezug auf das Ladegut auf als die zweite Schiene 14. Die erste, das Gleiten von Ladegut hemmende Schiene 3 ist dabei höhenverstellbar zwischen einer unteren Ruhestellung I (siehe Figur 2a) und einer oberen Betriebsstellung II (siehe Figur 2b). Während die erste Schiene 3 höhenverstellbar gegenüber dem Ladeboden 2 angeordnet ist, ist die zweite Schiene 14 fest in dem Ladeboden 2 montiert. Die zweite Schiene 14 könnte hierzu beispielsweise mittels Clipvorrichtungen in den Ladeboden 2 eingeclipst sein, dort verschraubt sein oder anderweitig an dem Ladeboden 2 befestigt sein.

Es ist somit möglich, die beiden Schienen 3, 14 wechselnd in Bezug auf das Ladegut zum Einsatz zu bringen, wie im Folgenden anhand der weiteren Figuren noch erklärt wird.

Das vorliegend gezeigte Schienensystem 1 beinhaltet weiterhin einen elektrischen Antrieb 8, der im vorliegenden Beispiel über ein Übertragungsmittel 9 die höhenverstellbare, erste Schiene 3 antreibt, um diese zwischen einer unteren Ruhestellung I und einer oberen Betriebsstellung II (siehe Figuren 2a und 2b) zu verfahren.

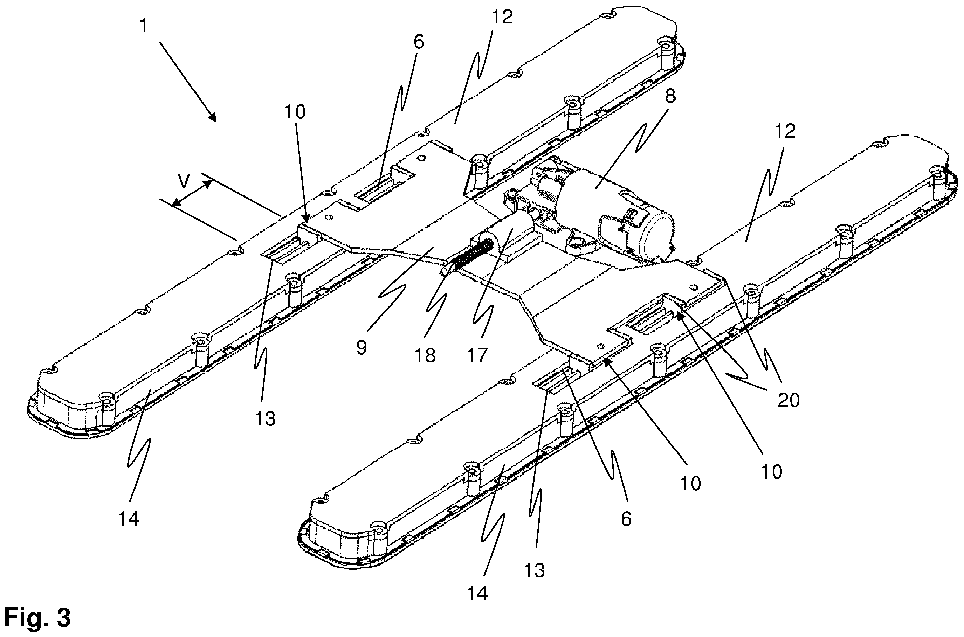

Nach vorliegendem Beispiel beinhaltet das Schienensystem 1 zwei erste Schienen 3, die beide rutschhemmend ausgebildet sind, und zwei zweite Schienen 14, die das Gleiten von Ladegut begünstigen. Die beiden höhenverstellbaren, ersten Schienen 3 sind dabei mittels eines gemeinsamen elektrischen Antriebs 8 verfahrbar, wofür ein gemeinsames Übertragungsmittel 9 für die beiden ersten Schienen 3 vorgesehen ist. Wie im Folgenden anhand der Figur 3 näher erklärt wird, ist das Übertragungsmittel 9 vorliegend als Schlitten ausgebildet, der mittels des Antriebs 8 in Längsrichtung der Schienen 3,14 verfahrbar ist, um die ersten Schienen 3 aus ihrer unteren Ruhestellung I in ihre obere Betriebsstellung II und zurück zu verfahren.

Vorliegend ist ein Beispiel ausgeführt, in welchem das Schienensystem 1 jeweils zwei erste Schienen 3 und jeweils zwei zweite Schienen 14 umfasst. Denkbar ist jedoch auch ein Schienensystem 1, welches nur eine einzige erste und zweite Schiene 3,14 oder auch mehrere erste Schienen 3 sowie mehrere zweite Schienen 14 umfasst. Dabei ist es auch möglich, die ersten Schienen 3 als das Gleiten von Ladegut fördernde Gleitschienen auszubilden und die zweiten Schienen 14 als rutschhemmende Schienen auszubilden, so dass in diesem Fall die Gleitschiene aus einer Ruhestellung I in eine Betriebsstellung II verfahrbar ist. Weiterhin ist es auch nicht zwangsläufig erforderlich, eine zweite Schiene 14 vorzusehen. Ebenso können auch nur erste Schienen 3 vorgesehen sein, die jedoch höhenverstellbar sind und somit temporär in einem Ladeboden 2 zum Einsatz kommen können.

Figur 2a zeigt die erste, höhenverstellbare Schiene 3 zusammen mit einem Verstellglied 6 in einer Ruhestellung I, während die Figur 2b die erste, höhenverstellbare Schiene 3 sowie das Verstellglied 6 in einer Betriebsstellung II zeigt. Zur Betätigung der ersten Schiene 3 ist ein Verstellglied 6 vorgesehen, welches gemäß der vorliegenden Erfindung die erste Schiene 3 von unten beaufschlagt und unterhalb der ersten Schiene 3 in Längsrichtung der Schiene 3 verfahrbar ist, um die Schiene 3 in ihrer Höhe zu verstellen. Die erste Schiene 3 ist hierzu auf ihrer Unterseite, welche stets die im eingebauten Zustand des Schienensystems 1 dem Ladeboden 2 bzw. dem Fahrzeugboden zugewandte Seite ist, einen Betätigungsbereich 4 auf, der wiederum mindestens eine Betätigungsschräge 5 beinhaltet.

Die vorliegend gezeigte Schiene 3 weist in ihrem Betätigungsbereich 4 mehrere Betätigungsschrägen 5 auf. Durch die mehreren Betätigungsschrägen 5 ist es einerseits möglich, die erste Schiene 3 gleichmäßig über ihre gesamte Längserstreckung anzuheben, ohne dass diese in Längsrichtung verkippt. Unterhalb der Schiene 3 ist das Verstellglied 6 erkennbar, das wenigstens ein Betätigungselement 7 aufweist. Das Verstellglied 6 ist nun vorzugsweise mittels eines elektrischen Antriebs 8 unterhalb des Betätigungsbereichs 4 der ersten Schiene 3 bzw. unterhalb der ersten Schiene 3 in Längsrichtung der Schiene 3 verfahrbar und hebt hierdurch beim Auflaufen des Betätigungselements 7 gegen die Betätigungsschräge 5 die Schiene 3 an, um in die in Figur 2b gezeigte Betriebsstellung II zu bringen.

Vorliegend weist das Verstellglied 6 ebenfalls mehrere Betätigungselemente 7 auf. Dies ist jedoch nicht unbedingt erforderlich, das Verstellglied 6 könnte auch wesentlich kürzer als die erste Schiene 3 ausgeführt sein und lediglich ein einziges Betätigungselement 7 aufweisen. Vorteilhaft hierbei wäre es, dass eine Ausrichtung des Verstellglieds 6 in Bezug auf die erste Schiene 3 nicht erforderlich ist, da das Verstellglied 6 bzw. das Betätigungselement 7 aufgrund der mehreren Betätigungsschrägen 5 der ersten Schiene 3 mehrere Angriffsmöglichkeiten findet. Die Montage des Schienensystems 1 ist hierdurch erleichtert. Sind jedoch wie vorliegend mehrere Betätigungselemente 7 und mehrere Betätigungsschrägen 5 vorhanden, so kann eine besonders gleichmäßige Hubbewegung der ersten Schiene 3 erreicht werden, die keinerlei weiteren Führungen für die Schiene 3 mehr benötigt.

Die vorliegend gezeigten Betätigungselemente 7 des Verstellglieds 6 sind keilförmig in Bezug auf die Längsrichtung des Verstellglieds 6 bzw. der ersten Schiene 3 ausgebildet. Hierdurch kann auf einem kurzen Verfahrweg V in Längsrichtung der Schiene 3 eine vergleichsweise große Hubbewegung erzielt werden. Grundsätzlich ist es jedoch auch denkbar, das Betätigungselement 7 gerade, beispielsweise lediglich als Betätigungsnocken, auszuführen.

Wie der Figur 2 weiterhin entnehmbar, weist das Verstellglied 6 vorliegend auf seiner Unterseite, welche wiederum der dem Ladeboden 2 bzw. der dem Fahrzeugboden zugewandten Seite entspricht, einen Eingriffsbereich 10 für das Übertragungsmittel 9 des elektrischen Antriebs 8 auf. Der Eingriffsbereich 10 sowie das Übertragungsmittel 9 werden im Folgenden noch anhand der Figur 3 näher beschrieben.

Wie der Figur 2 weiterhin entnehmbar, weist die erste Schiene 3 auf ihrer Unterseite eine Aussparung 11 auf, in welcher das Verstellglied 6 geschützt vor Verschmutzungen und optisch verdeckt angeordnet ist. Lediglich der Eingriffsbereich 10, der vorliegend durch zwei nach unten weisende Fortsätze 20 ausgebildet ist, ragt dabei über die Außenkonturen der Schiene 3 hinaus. Natürlich könnte der Eingriffsbereich 10 auch anderes ausgestaltet sein, beispielsweise durch einen einzigen Fortsatz, der einen Teil einer Clipverbidnung bildet, o. ä.

Das vorliegend gezeigte Verstellglied 6 weist dabei zwei Eingriffsbereiche 10 auf. Denkbar ist jedoch auch lediglich ein einziger Eingriffsbereich 10 oder noch weitere Eingriffsbereiche 10. Weist das Verstellglied 6 mehrere Eingriffsbereiche 10 auf, so ist es wiederum möglich, das Übertragungsmittel 9 beliebig in einen der Eingriffsbereiche 10 einzusetzen, so dass wiederum eine exakte Ausrichtung des Übertragungsmittels 9 in Bezug auf den Eingriffsbereich 10 bzw. das Verstellglied 6 nicht unbedingt erforderlich ist. Vorteilhaft bei der Ausbildung der Eingriffsbereiche 10 mittels zweier von der Unterseite des Verstellglieds 6 abstehender Fortsätze 20 ist es, dass diese Fortsätze beliebig verlängert werden können und somit für verschiedene Fahrzeuge an die Dicke des Ladebodens 2 problemlos angepasst werden können.

Das Betätigen des Verstellglieds 6 mittels des elektrischen Antriebs 8 und des Übertragungsmittels 9 wird nun anhand der Figur 3 dargestellt, welche eine Untersicht des Schienensystems 1 zeigt. Das Übertragungsmittel 9 ist vorliegend als Schlitten ausgebildet, der sich im Wesentlichen senkrecht zur Längsrichtung der Schienen 3 erstreckt. Die Schienen 3 sind in Fig. 3 durch eine Deckelelement 12 verdeckt und somit nicht sichtbar. Das Übertragungsmittel 9 ist vorliegend an seinen beiden Enden mit jeweils einem Verstellglied 6 einer Schiene 3 verbunden, von dem ebenfalls nur ein kleiner Teil durch die Öffnung 13 des Deckelelements 12 sichtbar ist. Zum Verfahren des Übertragungsmittels 9 ist der elektrische Antrieb 8 vorliegend mit einer Gewindespindel 18 verbunden, während das Übertragungsmittel 9 mit einer Gewindemutter 17 verbunden ist, so dass die Drehbewegung des Antriebs 8 in eine lineare Bewegung des Übertragungsmittels 9 umgesetzt wird. In Figur 3 ist außerdem der vergleichsweise kurze Verfahrweg V erkennbar, der bereits ausreichend ist, um die erste Schiene 3 aus ihrer Ruhestellung I in die Betriebsstellung II zu bringen.

Wie den Figuren 1,3 und 4 entnehmbar, ist gemäß dem vorliegenden Beispiel, in welchem das Schienensystem 1 sowohl erste Schienen 3 als auch zweite Schienen 14 beinhaltet, die erste, höhenverstellbare Schiene 3 innerhalb einer Ausnehmung 15 (siehe insbesondere Figur 4) der zweiten Schiene 14 angeordnet. Das Schienensystem 1 kann hierdurch platzsparend ausgeführt werden, wobei zugleich eine Lagerung der höhenverstellbaren ersten Schiene 3 in der zweiten Schiene 14 möglich ist. Eine solche Ausführung ist außerdem besonders montagefreundlich, da sie eine Vormontage der ersten Schiene 3 zusammen mit der zweiten Schiene 14 und dem Verstellglied 6 ermöglicht. Ein solcher Vormontageumfang bestehend aus der ersten Schiene 3, dem Verstellglied 6 und der zweiten Schiene 14 ist in Figur 4 in einer Untersicht gezeigt.

Besonders vorteilhaft für die Montage ist es dabei, wenn der Vormontageumfang weiterhin auch noch ein Deckelelement 12 (siehe Figur 3) umfasst, welches die Ausnehmung 15 der zweiten Schiene 14, in welcher die erste Schiene 3 angeordnet ist, verschließt. Das Deckelelement 12 weist dabei eine Öffnung 13 auf, welche einen Durchtritt der Fortsätze 20 bzw. des Eingriffsbereichs 10 der ersten Schiene 3 nach unten hin ermöglicht. Der so gebildete Vormontageumfang kann in einfacher Weise in das Fahrzeug eingebaut werden und fixiert zugleich die erste Schiene 3 und das Verstellglied 6 gegenüber der zweiten Schiene 14, so dass nach Montage in das Fahrzeug keinerlei Einstellarbeiten mehr durchzuführen sind. Vielmehr ist es lediglich erforderlich, das Übertragungsmittel 9 mit den Eingriffsbereichen 10 des Vormontageumfangs zu verbinden. Dies kann in besonders einfacher Weise dadurch erfolgen, dass diese lediglich von unten her ineinander gesetzt werden. Es ist somit auch möglich, den Vormontageumfang mittels der Befestigungsmittel der zweiten Schiene 14 in das Fahrzeug zu montieren und den elektrischen Antrieb 8 mit dem Übertragungsmittel 9 zu einem späteren Zeitpunkt zu montieren. Ebenso ist die Demontage des Schienensystems durch die Montagerichtung, die ausschließlich in Fahrzeughochrichtung bzw. senkrecht zur Oberseite und Unterseite der Schienen 3,14 liegt, erleichtert.

Figur 5 zeigt schließlich noch eine perspektivische Ansicht eines Ladebodens 2, in welchen ein derartiges Schienensystem 1 montierbar ist. Die Montage des Schienensystems 1 in dem Ladeboden 2 ist dabei dadurch vereinfacht, dass lediglich der Vormontageumfang, vorliegend bestehend aus der ersten Schiene 3, der zweiten Schiene 14, dem Verstellglied 6 sowie dem Deckelelement 12 in entsprechend vorgesehene Vertiefungen 19 des Ladebodens 2 eingesetzt werden muss. Der Vormontageumfang kann dabei beispielsweise mittels an der Schiene 14 angeformter oder separater Clipelemente, Verklebungen oder Verschraubungen befestigt werden. Die Vertiefungen 19 sind somit auf der Oberseite 21 des Ladebodens 2 angeordnet und die erste Schiene 3 und die zweite Schiene 14 sind auf der Oberseite 21 des Ladebodens 2 von oben montiert. Ebenso ist das Verstellglied 6 zusammen mit den ersten Schienen 3 und den zweiten Schienen 14 auf der Oberseite 21 des Ladebodens 2 von oben montiert, reicht jedoch durch entsprechende Öffnungen 16 bis an die Unterseite 22 des Ladebodens 2 bzw. steht über diese über. Hierdurch wird wiederum der Durchtritt des Übertragungsmittels 9 ermöglicht. Anschließend kann der elektrische Antrieb 8 auf der Unterseite 22 des Ladebodens 2 von unten her befestigt werden und das Übertragungsmittel 9 mit den bis auf die Unterseite 22 hindurch ragenden Eingriffsbereichen 10 des Verstellglieds 6 verbunden werden.

Die Eingriffsbereiche 10 mit den Fortsätzen 20 sowie das Übertragungsmittel 9 ermöglichen dabei eine Montage und Demontage in einer Richtung ausschließlich senkrecht zur Oberseite 21 bzw. zur Unterseite 22 des Ladebodens 2. Der Vormontageumfang mit den Schienen 3,14 einerseits sowie der Antrieb 8, gegebenenfalls zusammen mit dem Übertragungsmittel 9, andererseits können daher auch unabhängig voneinander montiert werden. Besonders vorteilhaft dabei ist es weiterhin, dass der Ladeboden 2 lediglich vergleichsweise kleine Durchbrechungen bzw. Öffnungen 16 für den Durchtritt der Fortsätze 20 bzw. der Eingriffsbereiche 10 benötigt, so dass der Ladeboden 2 dennoch sehr stabil ausgeführt werden kann.

Der vorliegende Ladeboden 2 weist dabei insgesamt vier Vertiefungen 19 auf, in denen vier erste Schienen 3 und vier zweite Schienen 14 angeordnet werden können. Dabei können jeweils zwei erste Schienen 3 mittels eines gemeinsamen Antriebs 8 betätigt werden, wie in Fig. 3 dargestellt. Natürlich können aber auch nur zwei Schienen 3 und zwei Schienen 14 an dem Ladeboden 2 angeordnet sein.

Es werden bei den folgenden Figuren für ähnliche oder identische Merkmale die gleichen Bezugszeichen wie in den vorbeschriebenen Figuren verwendet. Es wird somit im Folgenden lediglich auf die Unterschiede zu den vorbeschriebenen Ausführungen detailliert eingegangen.

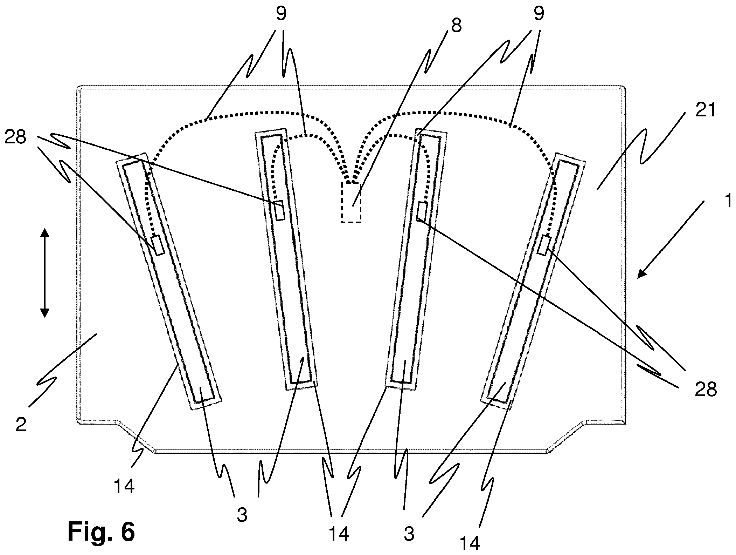

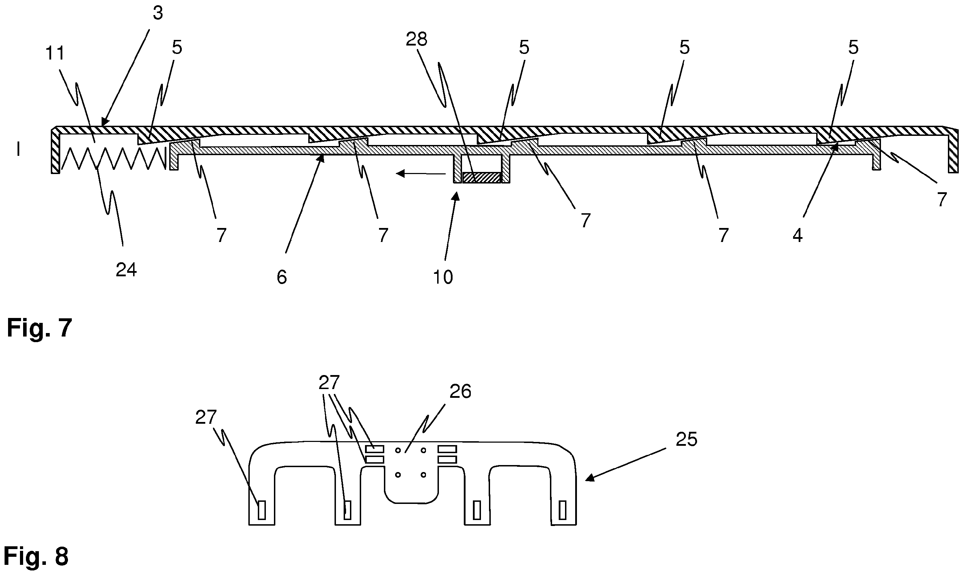

Das in Figur 6 gezeigte Schienensystem 1 beinhaltet ebenso wie das der Figur 1 mehrere erste Schienen 3, vorliegend vier erste Schienen 3, die rutschhemmend ausgebildet sind und mittels eines elektrischen Antriebs 8 wiederum zwischen einer unteren Ruhestellung I (siehe Figur 7 oder Figur 2a) und einer oberen Betriebsstellung II (wie in Figur 2b dargestellt) höhenverstellbar ist. Zusätzlich können, wie vorliegend dargestellt, auch hier mehrere zweite Schienen 14 vorgesehen sein, welche das Beladen des Ladebodens 2 begünstigen. Es versteht sich, dass die zweiten Schienen 14 nicht unbedingt erforderlich sind und die ersten Schienen 3 ihren Zweck auch ohne diese erfüllen.

Wie der Figur 6 entnehmbar, sind die ersten Schienen 3 und gegebenenfalls auch die zweiten Schienen 4 mit ihrer Längserstreckung in einem Winkel zueinander und in einem Winkel bezogen auf die Längsrichtung des Ladebodens 2 bzw. des Fahrzeugs (Längsrichtung hier durch einen Doppelpfeil symbolisiert) auf dem Ladeboden 2 angeordnet. Durch die Schrägstellung der Schienen 3, 14 kann mit nur wenigen Schienen 3, 14 ein sehr großer Bereich des Ladebodens 2 bezogen auf dessen Breite abgedeckt werden. Als Übertragungsmittel 9 können für derartige, schräg gestellte Schienen 3 insbesondere Bowdenzüge oder Steigungskabel eingesetzt werden. Die Schienen 3 können somit besonders flexibel bezüglich Ihrer Position wie auch bezüglich Ihres Winkels auf dem Ladeboden 2 angeordnet werden.

Ebenso wie zu Figur 5 beschrieben sind wiederum die Schienen 3, 14 sowie das vorliegend nicht dargestellten Verstellglied 6 und ein eventuelles Deckelelement (ebenfalls nicht dargestellt) auf der Oberseite 21 des Ladebodens 2 angeordnet. Der elektrische Antrieb 8 sowie die Übertragungsmittel 9 sind hingegen auf der Unterseite 22 (hier nicht sichtbar) angeordnet, wie durch die gestrichelte bzw. punktierte Darstellung angedeutet. An den Enden der Übertragungsmittel 9 sind dabei Kupplungselemente 28 vorgesehen, welche ähnlich wie zu Fig. 5 beschrieben beispielsweise durch Öffnungen 16 (hier nicht dargestellt) von der Unterseite 22 des Ladebodens 2 an die Oberseite 21 geführt werden können. Mittels der Kupplungselemente 28 können die Übertragungsmittel 9 dann wiederum mit einem Eingriffsbereich 10 (siehe Figur sieben) des Verstellglieds 6 verbunden werden. Alternativ könnte auch der Eingriffsbereich 10 des Verstellglieds 6 von der Oberseite 21 her bis an die Unterseite 22 durch die Öffnungen 16 hindurchreichen (S. Fig. 7). Ebenso ist es natürlich auch denkbar, dass die Übertragungsmittel 9 über das Kupplungselement 28 mit einem weiteren Übertragungsmittel 9, welches an dem Verstellglied 6 angeordnet ist, verbunden werden. Die Übertragungsmittel 9 wären somit zweiteilig ausgebildet.

Figur 7 zeigt wiederum eine schematische Schnittdarstellung einer ersten, höhenverstellbaren Schiene 3 zusammen mit dem Verstellglied 6. Wie im mittleren Bereich der Figur 7 erkennbar, weist das Verstellglied 6 wiederum einen Eingriffsbereich 10 auf, mit welchem es mit dem Kupplungselement 28 der Übertragungsmittel 9 verbunden werden kann. Es versteht sich, dass der Eingriffsbereich auch hier lediglich beispielhaft ausgeführt ist und zahlreiche Abwandlungen bezüglich des Eingriffsbereichs 10 und der Verbindung mit dem Kupplungselements 28 möglich sind.

Das Betätigen der höhenverstellbaren Schiene 3 erfolgt nun wie zu Figur 2 beschrieben durch ein Verfahren des Verstellglied 6 in Pfeilrichtung. Ist als Übertragungsmittel 9 ein Steigungskabel vorgesehen, so ist, beispielsweise mittels eines Zahnrades, ein Antrieb des Verstellglieds 6 sowohl zum Anheben der ersten Schiene 3 als auch in entgegengesetzter Richtung zum Absenken der Schiene 3 möglich. Vorliegend ist jedoch zum Zurückstellen der ersten Schiene 3 aus der angehobenen Betriebsstellung II in die vorliegend dargestellten Ruhestellung I ein Federelement 24 vorgesehen. Der Antrieb des Verstellglieds 6 kann in diesem Fall in besonders einfacher Weise zum Anheben der ersten Schiene 3 mittels eines Bowdenzugs erfolgen. Sowohl das Übertragungsmittel 9 als auch der elektrische Antrieb 8 können in diesem Fall besonders einfach ausgestaltet werden. Zudem ist auch eine manuelle Betätigung über einen Bowdenzug mit Rückstellung durch das Federelement 24 denkbar.

Figur 8 zeigt schließlich noch eine schematische Draufsicht auf einen Grundträger 25, welcher die Montage des Schienensystems 1 erheblich erleichtert.

Der Grundträger 25 beinhaltet hierzu eine Aufnahme 26 für den elektrischen Antrieb acht, welche vorliegend in Form von vier Bohrungen ausgebildet ist, in welche der Antrieb mit entsprechenden Clipelementen einfach eingeclipst werden kann. Ebenso weist der Grundträger 25 mehrere Fixiereinrichtungen 27 auf, die vorliegend lediglich symbolisch dargestellt sind, und welche die Übertragungsmittel 9, beispielsweise Bowdenzüge oder Steigungskabel, an dem Grundträger 25 fixieren können. Die Fixiereinrichtungen können beispielsweise als Clipelemente oder sonstige Halterungen oder auch durch eine Nut in dem Grundträger ausgebildet sein, in welche die Übertragungsmittel 9 eingelegt oder eingeklemmt werden. Der Grundträger 25 sowie der Antrieb 8 und die Übertragungsmittel 9 können hierdurch in besonders vorteilhafterweise als Vormontageumfang ausgeführt werden und in einfacher Weise von unten auf der Unterseite 22 des Ladebodens 2 montiert werden.

Zur Montage des Grundträgers 25 kann der Ladeboden 2 unterseitig ähnlich wie in Figur 5 gezeigt Vertiefungen 19 aufweisen, in welche der Grundträger 25 einfach eingesetzt werden kann. Der Grundträger 25, der Antrieb 8 und die Übertragungsmittel 9 sind hierdurch automatisch lagerichtig sowohl in Bezug auf das Fahrzeug als auch in Bezug zueinander positioniert. Sind auf der Oberseite 21 des Ladebodens 2, wie in Figur 5 gezeigt, ebenso Vertiefungen 19 oder andere Positionierhilfen für die Schienen 3,14 vorgesehen, so sind auch diese wiederum lagerichtig in Bezug auf den Antrieb 8, die Übertragungsmittel 9 und den Grundträger 25 positioniert. Die Montage des Schienensystems 1 ist somit im Vergleich zu dem der Figur 5 weiter erleichtert, da nun lediglich der Vormontageumfang, welcher die Schienen 3,14 enthält, von oben in die entsprechenden Vertiefungen 19 des Ladebodens 2 eingelegt werden muss und anschließend der zweite Vormontageumfang mit dem Grundträger 25 von unten dagegen gesetzt werden kann. Gegebenenfalls wird der Grundträger noch mit wenigen Schrauben (nicht gezeigt) von der Unterseite 22 des Ladebodens 2 her an den Schienen 3, 14 fixiert. Besonders vorteilhaft ist es dabei, dass aufgrund dessen, dass mittels des Grundträgers 25 die Bauteile die Schienensystems 1 lagerichtig in Bezug auf einander positioniert sind, das beschriebene Schienensystem 1 weitgehend unempfindlich gegenüber Fahrzeugtoleranzen ist und somit ein aufwendiges Einmessen oder Einlehren des Schienensystems 1 nicht erforderlich ist.

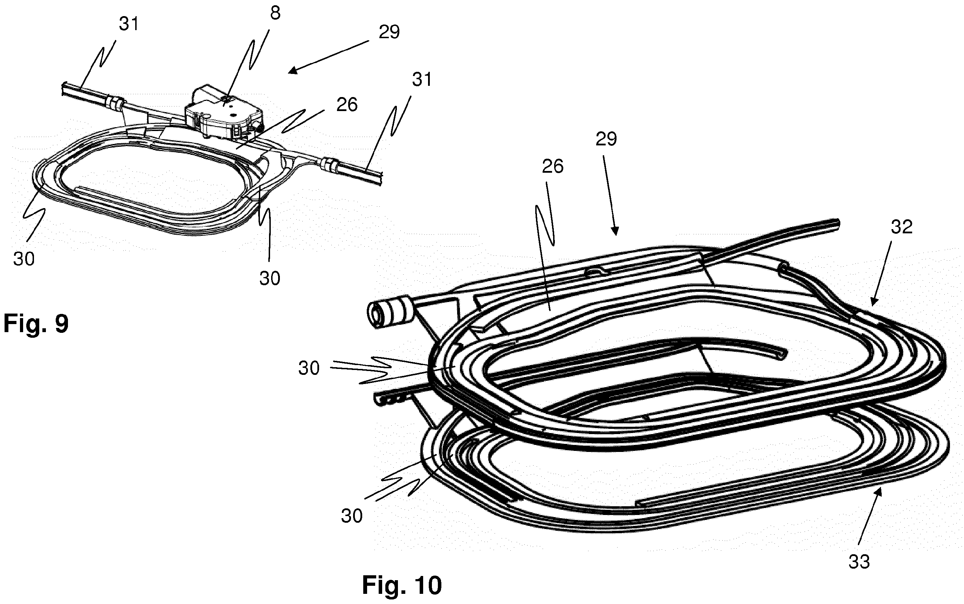

Wird das Schienensystem 1 mittels flexibler Übertragungsmittel 9 wie Steigungskabel betätigt, so ist es vorteilhaft, wenn der Grundträger 25 ein Kanalbauteil 29 beinhaltet oder als Kanalbauteil 29 ausgebildet ist. Ein solches Kanalbauteil 29 ist in den Figuren 9 und 10 gezeigt. Die Figur 10 zeigt dabei eine Detailansicht des Kanalbauteils 29 in einer Explosionsdarstellung, während die Figur 9 das Kanalbauteil 29 als Vormontageumfang zusammen mit anderen Bauteilen des Schienensystems 1 zeigt. Mittels eines solchen Kanalbauteils 29 können temporäre Überlängen der Übertragungsmittel 9, die beim Verschieben der Übertragungsmittel 9 in ihren Führungsrohren 31 (s. Fig. 9) bzw. bei sich in Ruhestellung befindlicher Schiene auftreten, aufgenommen und sicher geführt werden.

Das Kanalbauteil 29 weist vorliegend zwei Führungskanäle 30 auf, in welchen die Übertragungsmittel 9 geführt sind. Die Übertragungsmittel 9 können dabei auch bereits vor der Montage in das Fahrzeug an dem Kanalbauteil 29 vormontiert werden, wodurch die Montage des Schienensystems 1 erheblich erleichtert wird. Die Führungskanäle 30 bilden dabei eine Fixiereinrichtung 27 für die Übertragungsmittel 9 aus. Neben den Führungskanälen 30 beinhaltet das Kanalbauteil 29 ebenso wie der Grundträger 25 der Fig. 8 eine Aufnahme 26 für den elektrischen Antrieb 8 des Schienensystems, so dass auch der Antrieb 8 bereits vormontiert werden kann. Somit sind der Antrieb 8 und die Übertragungsmittel 9 mittels des Kanalbauteils 29 lagerichtig zueinander positioniert und der gesamte Vormontageumfang kann wiederum ohne aufwendiges Einmessen von unten auf der Unterseite 22 des Ladebodens 2 (s. Fig. 5 und 6) montiert werden.

Wie insbesondere der Detaildarstellung der Figur 10 entnehmbar, sind die Führungskanäle 30 vorliegend spiralförmig in dem Kanalbauteil 29 ausgebildet. Das Kanalbauteil 29 ist dabei aus einer Oberschale 32 und einer Unterschale 33 zusammengesetzt, in welchen jeweils nutartige Vertiefungen angeordnet sind. Durch das Zusammensetzen der Oberschale 32 und der Unterschale 33 werden hierdurch die die Führungskanäle 30 ausgebildet. Ein solches Kanalbauteil 29 kann kostengünstig als Spritzgussteil hergestellt werden.

Um die Montage des Schienensystems 1 in das Fahrzeug weiter zu erleichtern, ist es vorteilhaft, wenn wie in Fig. 9 gezeigt, auch Führungsrohre 31 für die Übertragungsmittel 9 bereits an dem an dem Kanalbauteil 29 angeordnet sind. Selbiges gilt natürlich auch für den Grundträger 25 der Fig. 8. Der Vormontageumfang weist hierdurch bereits beim Transport und beim Handling während der Montage eine hohe Stabilität auf. Die Führungsrohre 31 sind vorliegend abgebrochen dargestellt und können je nach Anordnung der Schienen 3, 14 und des Antriebs 8 bzw. des Grundträgers 25 und/oder des Kanalbauteils 29 unterschiedliche geometrische Ausprägungen aufweisen. Insbesondere, wenn die Schienen 3, 14 nahe dem Antrieb 8 angeordnet sind, ist es dabei auch denkbar, die Führungsrohre 31 einteilig mit dem Kanalbauteil 29 oder einem Teil des Kanalbauteils 29 auszuführen. Insbesondere bei längeren und/oder mehrfach gebogenen Führungsrohren 31 ist es jedoch vorteilhaft, wenn die Führungsrohre 31 beispielsweise. schwenkbar mit dem Kanalbauteil 29 verbunden sind. Zum Transport und Handling des Vormontageumfangs können die Führungsrohre 31 somit platzsparend an das Kanalbauteil 29 angeklappt und erst bei oder nach dem Einbau in das Fahrzeug in ihre Einbaustellung ausgeklappt werden.

### Bezugszeichenliste

- 1: Schienensystem
- 2: Ladeboden
- 3: erste Schiene
- 4: Betätigungsbereich
- 5: Betätigungsschräge
- 6: Verstellglied
- 7: Betätigungselement
- 8: elektrischer Antrieb
- 9: Übertragungsmittel
- 10: Eingriffsbereich
- 11: Aussparung
- 12: Deckelelement
- 13: Öffnung des Deckelelements
- 14: zweite Schiene
- 15: Ausnehmung
- 16: Öffnung des Ladebodens
- 17: Gewindemutter
- 18: Gewindespindel
- 19: Vertiefung
- 20: Fortsatz
- 21: Oberseite
- 22: Unterseite
- 23: Abdeckung
- 24: Federelement
- 25: Grundträger
- 26: Aufnahme
- 27: Fixiereinrichtung
- 28: Kupplungselement
- 29: Kanalbauteil
- 30: Führungskanäle
- 31: Führungsrohre
- 32: Oberschale
- 33: Unterschale
- I: Ruhestellung
- II: Betriebsstellung
- V: Verfahrweg

## Patentansprüche

1. Schienensystem (1) für einen Ladeboden (2) eines Kraftfahrzeugs mit wenigstens einer ersten Schiene (3), wobei die erste Schiene (3) zwischen einer unteren Ruhestellung (I) und einer oberen Betriebsstellung (II) höhenverstellbar ist, wobei die wenigstens eine erste Schiene (3) auf ihrer Unterseite einen Betätigungsbereich (4) mit wenigstens einer, in Längsrichtung der ersten Schiene (3) verlaufenden Betätigungsschräge (5) aufweist und dass unterhalb des Betätigungsbereichs (4) ein entlang des Betätigungsbereichs (4) verfahrbares, wenigstens ein Betätigungselement (7) aufweisendes Verstellglied (6) angeordnet ist, wobei das Verstellglied (6) mittels eines elektrischen Antriebs (8) verfahrbar ist, **dadurch gekennzeichnet, dass** zwischen dem Verstellglied (6) und dem elektrischen Antrieb (8) ein Schlitten oder ein Bowdenzug oder ein Steigungskabel als Übertragungsmittel (9) angeordnet ist.

2. Schienensystem (1) nach dem vorhergehenden Anspruch, **dadurch gekennzeichnet, dass** das Verstellglied (6) wenigstens einen Eingriffsbereich (10) für das Übertragungsmittel (9) aufweist.

3. Schienensystem (1) nach einem der vorhergehenden Ansprüche, **dadurch gekennzeichnet, dass** das Schienensystem (1) ein Federelement (24) zum Rückstellen des Verstellglieds (6) aufweist.

4. Schienensystem (1) nach einem der vorhergehenden Ansprüche, **dadurch gekennzeichnet, dass** das wenigstens eine Betätigungselement (7) des Verstellglieds (6) keilförmig ausgebildet ist.

5. Schienensystem (1) nach einem der vorhergehenden Ansprüche, **dadurch gekennzeichnet, dass** die wenigstens eine erste Schiene (3) auf ihrer Unterseite eine Aussparung (11) aufweist und dass das Verstellglied (6) innerhalb der Aussparung (11) angeordnet ist.

6. Schienensystem (1) nach einem der vorhergehenden Ansprüche, **dadurch gekennzeichnet, dass** das Schienensystem (1) wenigstens eine zweite Schiene (14) aufweist, welche zur orts-festen Montage an dem Ladeboden (2) ausgebildet ist.

7. Schienensystem (1) nach dem vorhergehenden Anspruch, **dadurch gekennzeichnet, dass** die wenigstens eine erste, höhenverstellbare Schiene (3) innerhalb einer Ausnehmung (15) der wenigstens einen, zweiten Schiene (14) angeordnet ist.

8. Schienensystem (1) nach einem der vorhergehenden Ansprüche, **dadurch gekennzeichnet, dass** die wenigstens eine erste Schiene (3) ein Deckelelement (12) zum Verschließen der Aussparung (11) und/oder die wenigstens eine zweite Schiene (14) ein Deckelelement (12) zum Verschließen der Ausnehmung (15) aufweist, wobei das Deckelelement (12) wenigstens eine Öffnung (13) für den Durchtritt des wenigstens einen Eingriffsbereichs (10) des Verstellglieds (6) aufweist.

9. Schienensystem (1) nach einem der vorhergehenden Ansprüche, **dadurch gekennzeichnet, dass** die wenigstens eine erste, höhenverstellbare Schiene (3), vorzugsweise die wenigstens eine erste Schiene (3) und die wenigstens eine zweite Schiene (14), und das Verstellglied (6) einen Vormontageumfang bilden.

10. Schienensystem (1) nach einem der vorhergehenden Ansprüche, **dadurch gekennzeichnet, dass** das Schienensystem (1) mehrere erste Schienen (3) umfasst, wobei jeweils zwei der mehreren ersten Schienen (3) mittels eines gemeinsamen Antriebs (8) höhenverstellbar sind.

11. Schienensystem (1) nach dem vorhergehenden Anspruch, **dadurch gekennzeichnet, dass** wenigstens zwei der mehreren ersten Schienen (3) in einem Winkel zueinander angeordnet sind.

12. Schienensystem (1) nach einem der vorhergehenden Ansprüche, **dadurch gekennzeichnet, dass** das Schienensystem (1) einen Grundträger (25) mit einer Aufnahme (26) für den Antrieb (8) und wenigstens einer Fixiereinrichtung (27) für wenigstens ein Übertragungsmittel (9) umfasst.

13. Schienensystem (1) nach dem vorhergehenden Anspruch, **dadurch gekennzeichnet, dass** der Grundträger ein Kanalbauteil (29) mit zwei Führungskanälen (30) zur Aufnahme von temporären Überlängen der Übertragungsmittel (9) umfasst.

14. Schienensystem (1) nach dem vorhergehenden Anspruch, **dadurch gekennzeichnet, dass** die Aufnahme (26) für den Antrieb (8) an das Kanalbauteil (29) angeformt ist.

15. Schienensystem (1) nach einem der drei vorhergehenden Ansprüche, **dadurch gekennzeichnet, dass** das Schienensystem_Führungsrohre (31) für die Übertragungsmittel (9) aufweist und dass die Führungsrohre (31) mit jeweils einem ihrer Enden an dem Kanalbauteil (29) befestigt sind, vorzugsweise schwenkbar an dem Kanalbauteil (29) befestigt sind.

16. Schienensystem (1) nach einem der Ansprüche 13 - 15, **dadurch gekennzeichnet, dass** der Grundträger (25) mit dem Antrieb (8) und dem wenigstens einen Übertragungsmittel (9) einen Vormontageumfang bildet.

17. Ladeboden (2) eines Kraftfahrzeugs mit einem Schienensystem (1) nach einem der vorhergehenden Ansprüche.

18. Ladeboden (2) nach dem vorhergehenden Anspruch, **dadurch gekennzeichnet, dass** die wenigstens eine erste Schiene (3), vorzugsweise die wenigstens eine erste Schiene (3) und die wenigstens eine zweite Schiene (14), auf einer Oberseite (21) des Ladebodens (2) angeordnet sind.

19. Ladeboden (2) nach einem der beiden vorhergehenden Ansprüche, **dadurch gekennzeichnet, dass** das Verstellglied (6) auf der Oberseite (21) des Ladebodens (2) angeordnet ist und dass der Ladeboden (2) wenigstens eine Öffnung (16) für den Durchtritt des wenigstens einen Eingriffsbereichs (10) des Verstellglieds (6) aufweist, wobei der elektrische Antrieb (8) auf einer Unterseite (22) des Ladebodens (2) angeordnet ist.

20. Ladeboden (2) nach einem der Ansprüche 18 - 19, **dadurch gekennzeichnet, dass** der Ladeboden (2) wenigstens eine Vertiefung (19) aufweist und dass der Vormontageumfang umfassend die wenigstens eine erste Schiene (3), vorzugsweise die wenigstens eine erste Schiene (3) und die wenigstens eine zweite Schiene (14), und das Verstellglied (6) in der Vertiefung (19) in dem Ladeboden (2) angeordnet ist.

## Claims

1. A rail system (1) for a loading floor (2) of a motor vehicle having at least one first rail (3), the first rail (3) being adjustable in height between a lower rest position (I) and an upper operating position (II), the at least one first rail (3) comprising an actuating area (4) on the underside thereof having at least one actuating ramp (5) extending in the longitudinal direction of the first rail (3) and an adjusting member (6) comprising an actuating element (7) for displacing along the actuating area (4) being disposed below the actuating area (4), the adjusting member (6) being displaceable by means of an electric drive (8), **characterized in that** a carriage or a Bowden cable or a transmission cable is disposed as a transmission means (9) between the adjusting member (6) and the electric drive (8).

2. The rail system (1) according to the preceding claim, **characterized in that** the adjusting member (6) comprises at least one engaging area (10) for the transmission means (9).

3. The rail system (1) according to any one of the preceding claims, **characterized in that** the rail system (1) comprises a spring element (24) for returning the adjusting member (6).

4. The rail system (1) according to any one of the preceding claims, **characterized in that** the at least one actuating element (7) of the adjusting member (6) is implemented in the shape of a wedge.

5. The rail system (1) according to any one of the preceding claims, **characterized in that** the at least one first rail (3) comprises a recess (11) on the underside thereof and that the adjusting member (6) is disposed within the recess (11).

6. The rail system (1) according to any one of the preceding claims, **characterized in that** the rail system (1) comprises at least one second rail (14) implemented for mounting on the loading floor (2) in a fixed position.

7. The rail system (1) according to the preceding claim, **characterized in that** the at least one first, height-adjustable rail (3) is disposed within a recess (15) of the at least one second rail (14).

8. The rail system (1) according to any one of the preceding claims, **characterized in that** the at least one first rail (3) comprises a cover element (12) for closing off the recess (11) and/or the at least one second rail (14) comprises a cover element (12) for closing off the recess (15), wherein the cover element (12) comprises at least one opening (13) for passing through the at least one engaging area (10) of the adjusting member (6).

9. The rail system (1) according to any one of the preceding claims, **characterized in that** the at least one first, height-adjustable rail (3), preferably the at least one first rail (3) and the at least one second rail (14), and the adjusting member (6) form a pre-assembled scope.

10. The rail system (1) according to any one of the preceding claims, **characterized in that** the rail system (1) comprises a plurality of first rails (3), wherein two of the plurality of first rails (3) are adjustable in height by means of a corresponding common drive (8).

11. The rail system (1) according to the preceding claim, **characterized in that** at least two of the plurality of first rails (3) are disposed at an angle to each other.

12. The rail system (1) according to any one of the preceding claims, **characterized in that** the rail system (1) comprises a base support (25) having a receptacle (26) for the drive (8) and at least one fixing device (27) for at least one transmission means (9).

13. The rail system (1) according to the preceding claim, **characterized in that** the base support comprises a channel component (29) having two guide channels (30) for receiving temporary excess lengths of the transmission means (9).

14. The rail system (1) according to the preceding claim, **characterized in that** the receptacle (26) for the drive (8) is formed onto the channel component (29).

15. The rail system (1) according to any one of the three preceding claims, **characterized in that** the rail system comprises guide tubes (31) for the transmission means (9) and that one end of each of the guide tubes (31) is attached to the channel component (29), preferably pivotally attached to the channel component (29).

16. The rail system (1) according to any one of the claims 13-15, **characterized in that** the base support (25) forms a preassembled scope with the drive (8) and the at least one transmission means (9).

17. A loading floor (2) of a motor vehicle having a rail system (1) according to any one of the preceding claims.

18. The loading floor (2) according to the preceding claim, **characterized in that** the at least one first rail (3), preferably the at least one first rail (3) and the at least one second rail (14), is disposed on a top side (21) of the loading floor (2).

19. The loading floor (2) according to any one of the two preceding claims, **characterized in that** the adjusting member (6) is disposed on the top side (21) of the loading floor (2) and that the loading floor (2) comprises at least one opening (16) for passing through the at least one engaging area (10) of the adjusting member (6), wherein the electric drive (8) is disposed on an underside (22) of the loading floor (2).

20. The loading floor (2) according to any one of the claims 18-19, **characterized in that** the loading floor (2) comprises at least one depression (19) and that the preassembly scope comprising the at least one first rail (3), preferably the at least one first rail (3) and the at least one second rail (14), and the adjusting member (6) is disposed in the depression (19) in the loading floor (2).

## Revendications

1. Système de rails (1) pour un fond de chargement (2) d'un véhicule automobile, comprenant au moins un premier rail (3), le premier rail (3) pouvant être positionné en hauteur entre une position de repos basse (I) et une position de service haute (II), l'au moins un premier rail (3) possédant sur son côté inférieur une zone d'actionnement (4) pourvue d'au moins un biseau d'actionnement (5) qui s'étend dans la direction longitudinale du premier rail (3), et un organe de positionnement (6) qui possède au moins un élément d'actionnement (7) et qui peut être déplacé le long de la zone d'actionnement (4) étant disposé au-dessous de la zone d'actionnement (4), l'organe de positionnement (6) pouvant être déplacé au moyen d'un mécanisme d'entraînement électrique (8), **caractérisé en ce qu'**un chariot ou un câble sous gaine ou un câble de montée est disposé en tant que moyen de transmission (9) entre l'organe de positionnement (6) et le mécanisme d'entraînement électrique (8).

2. Système de rails (1) selon la revendication précédente, **caractérisé en ce que** l'organe de positionnement (6) possède au moins une zone de prise (10) pour le moyen de transmission (9).

3. Système de rails (1) selon l'une des revendications précédentes, **caractérisé en ce que** le système de rails (1) possède un élément ressort (24) servant au rappel de l'organe de positionnement (6).

4. Système de rails (1) selon l'une des revendications précédentes, **caractérisé en ce que** l'au moins un élément d'actionnement (7) de l'organe de positionnement (6) est de configuration cunéiforme.

5. Système de rails (1) selon l'une des revendications précédentes, **caractérisé en ce que** l'au moins un premier rail (3) possède une cavité (11) sur son côté inférieur et **en ce que** l'organe de positionnement (6) est disposé à l'intérieur de la cavité (11).

6. Système de rails (1) selon l'une des revendications précédentes, **caractérisé en ce que** le système de rails (1) possède au moins un deuxième rail (14), lequel est configuré pour un montage en position fixe sur le fond de chargement (2).

7. Système de rails (1) selon la revendication précédente, **caractérisé en ce que** l'au moins un premier rail (3) positionnable en hauteur est disposé à l'intérieur d'un évidement (15) de l'au moins un deuxième rail (14).

8. Système de rails (1) selon l'une des revendications précédentes, **caractérisé en ce que** l'au moins un premier rail (3) possède un élément de recouvrement (12) destiné à fermer la cavité (11) et/ou l'au moins un deuxième rail (14) possède un élément de recouvrement (12) destiné à fermer l'évidement (15), l'élément de recouvrement (12) possédant au moins une ouverture (13) pour le passage de l'au moins une zone de prise (10) de l'organe de positionnement (6).

9. Système de rails (1) selon l'une des revendications précédentes, **caractérisé en ce que** l'au moins un premier rail (3) positionnable en hauteur, de préférence l'au moins un premier rail (3) et l'au moins un deuxième rail (14), et l'organe de positionnement (6) forment un ensemble de prémontage.

10. Système de rails (1) selon l'une des revendications précédentes, **caractérisé en ce que** le système de rails (1) comporte plusieurs premiers rails (3), deux des plusieurs premiers rails (3) étant respectivement positionnables en hauteur au moyen d'un mécanisme d'entraînement (8) commun.

11. Système de rails (1) selon la revendication précédente, **caractérisé en ce qu'**au moins deux des plusieurs premiers rails (3) sont disposés selon un certain angle l'un par rapport à l'autre.

12. Système de rails (1) selon l'une des revendications précédentes, **caractérisé en ce que** le système de rails (1) comporte un élément porteur de base (25) muni d'un logement (26) pour le mécanisme d'entraînement (8) et au moins un dispositif d'immobilisation (27) pour au moins un moyen de transmission (9).

13. Système de rails (1) selon la revendication précédente, **caractérisé en ce que** l'élément porteur de base comporte un élément structural de canal (29) comprenant deux canaux de guidage (30) destinés à accueillir les surlongueurs temporaires du moyen de transmission (9).

14. Système de rails (1) selon la revendication précédente, **caractérisé en ce que** le logement (26) pour le mécanisme d'entraînement (8) est façonné contre l'élément structural de canal (29).

15. Système de rails (1) selon l'une des trois revendications précédentes, **caractérisé en ce que** le système de rails possède des tubes de guidage (31) pour le moyen de transmission (9) et **en ce que** les tubes de guidage (31) sont respectivement fixés par l'une de leurs extrémités à l'élément structural de canal (29), de préférence fixés pivotants à l'élément structural de canal (29).

16. Système de rails (1) selon l'une des revendications 13 à 15, **caractérisé en ce que** l'élément porteur de base (25) avec le mécanisme d'entraînement (8) et l'au moins un moyen de transmission (9) forme un ensemble de prémontage.

17. Fond de chargement (2) d'un véhicule automobile, comprenant un système de rails (1) selon l'une des revendications précédentes.

18. Fond de chargement (2) selon la revendication précédente, **caractérisé en ce que** l'au moins un premier rail (3), de préférence l'au moins un premier rail (3) et l'au moins un deuxième rail (14), sont disposés sur un côté supérieur (21) du fond de chargement (2).

19. Fond de chargement (2) selon l'une des revendications précédentes, **caractérisé en ce que** l'organe de positionnement (6) est disposé sur le côté supérieur (21) du fond de chargement (2) et **en ce que** le fond de chargement (2) possède au moins une ouverture (16) pour le passage de l'au moins une zone de prise (10) de l'organe de positionnement (6), le mécanisme d'entraînement (8) électrique étant disposé sur un côté inférieur (22) du fond de chargement (2).

20. Fond de chargement (2) selon l'une des revendications 18 à 19, **caractérisé en ce que** le fond de chargement (2) possède au moins une empreinte (19) et **en ce que** l'ensemble de prémontage comprenant l'au moins un premier rail (3), de préférence l'au moins un premier rail (3) et l'au moins un deuxième rail (14), et l'organe de positionnement (6) est disposé dans l'empreinte (19) dans le fond de chargement (2).
